# EUROPÄISCHE PATENTSCHRIFT

(11) **EP 1 379 354 B1**
(45) Veröffentlichungstag und Bekanntmachung des Hinweises auf die Patenterteilung: **03.11.2004**
(21) Anmeldenummer: 02740494.6
(22) Anmeldetag: 22.04.2002
(51) Int. Cl.: B23K 9/10

(54) **VERFAHREN ZUM METALL-SCHUTZGAS-LICHTBOGENSCHWEISSEN**
METHOD USED IN GAS-SHIELDED METAL-ARC WELDING
PROCEDE DE SOUDAGE A L'ARC DE METAL SOUS GAZ PROTECTEUR

(30) Priorität: 20.04.2001 DE 10120744
(43) Veröffentlichungstag der Anmeldung: 14.01.2004
(73) Patentinhaber: Technische Universität Berlin, 10623 Berlin (DE)
(72) Erfinder: GOECKE, Sven-Frithjof, 14471 Potsdam (DE); HÜBNER, Marc, 14979 Grossbeeren (DE)
(74) Vertreter: Bittner, Thomas L.
(86) Internationale Anmeldenummer: PCT/EP2002/004416
(87) Internationale Veröffentlichungsnummer: WO 2002/085565

(56) Entgegenhaltungen:
- EP-A- 0 769 343
- DE-A- 4 029 117
- DE-C- 4 129 247
- GB-A- 2 242 547
- CHEN ET AL.: "Intelligent methodology for sensing, modelling and control of pulsed gtaw part 2-butt joint welding" ****, Bd. 00, Nr. 00, Juni 2000 (2000-06), Seiten 00-00, XP000954654 ***

## Beschreibung

Die Erfindung betrifft ein Verfahren zum Metall-Schutzgas-Lichtbogenschweißen beim Wiederzünden im Schweißprozess.

Metall-Schutzgas-Lichtbogen-Schweißen (MSG-Schweißen) wird seit langer Zeit zum Auftragsschweißen, Verschweißen oder Verlöten von ein, zwei oder mehreren Fügepartnern aus metallischen Werkstoffen eingesetzt. Dabei wird in einer Schutzgasatmosphäre der Zusatzwerkstoff in Form eines Drahtes oder eines Bandes in einem von einer elektrischen Schweißstromquelle erzeugten Lichtbogen abgeschmolzen. Der Lichtbogen brennt hierbei zwischen dem Grundwerkstoff und dem abschmelzenden Zusatzwerkstoff (Elektrode). Je nach verwendetem Schutzgas spricht man von Metall-Aktivgas-Schweißen (MAG-Schweißen) oder Metall-Inertgas-Schweißen (MIG-Schweißen). Weitere Unterscheidungsmerkmale ergeben sich durch die Wahl unterschiedlicher Verfahrensparameter. So unterscheidet man Kurz(schluss)lichtbogen-, Langlichtbogen-, Sprühlichtbogen-, Rotationslichtbogen- und Impulslichtbogen-Schweißen.

Das Kurzlichtbogen-Schweißen (Klb-Schweißen) ist charakterisiert durch eine Lichtbogenbrennphase und eine Kurzschlussphase. In der Lichtbogenbrennphase wird am Elektrodenende ein schmelzflüssiger Tropfen erzeugt. Aufgrund der stetigen Drähtzufuhr und dem wachsenden Tropfenvolumen berührt der Tropfen nach einer gewissen Zeit das Schmelzbad. In dieser Kurzschlussphase wird der Tropfen durch den sich einstellenden hohen Kurzschlussstrom abgeschnürt und der Lichtbogen zündet neu. Der Schweißprozess wechselt also in mehr oder weniger regelmäßigen Abständen zwischen zwei Prozesszuständen hin und her, wobei der Werkstoffübergang ausschließlich in der Kurzschlussphase stattfindet.

In diesem zyklisch ablaufenden Schweißprozess treten stochastische Schwankungen der Prozessparameter auf, die durch äußere Störeinflüsse und durch die Charakteristik der Prozessregelung in der Maschine verursacht werden. Dabei sind die Kurzschlussdauer und üblicherweise auch die Höhe des Stroms beim Aufreißen eines Kurzschlusses und Wiederzünden des Lichtbogens nicht definierbar.
Bisher nimmt beim Klb-Schweißen der Strom in einer Kurzschlussphase entsprechend der Maschinencharakteristik mit der Zeit (dt) stetig zu. In neueren Maschinen wird der Kurzschlussstromanstieg z.T. mehrphasig mit unterschiedlichen dl/dt ermöglicht. Ähnlich ist auch die Kurzschlussbehandlung beim Impulslichtbogenschweißen. Bei Aufreißen des Kurzschlusses und anschließender Lichtbogenzündung liegt daher ein wesentlich höherer Strom vor.

Hauptnachteil eines hohen Wiederzündstroms ist die starke Erwärmung der schmelzflüssigen Brücke zwischen dem Elektrodendraht und dem Schmelzbad, die zu einem schlagartigen Aufreißen führt.

Als Folge entstehen Fehler im Schweißergebnis, wie:
- Schweißspritzer
- Herausblasen der Schmelze mit einer Lochbildung insbesondere bei Dünnblechen
- Verdampfungsverluste insbesondere bei Legierungselementen mit hohem Dampfdruck, z.B. Zn und Mg.

In der DE 41 29 247 A1, die den nächstliegenden Stand der Technik darstellt, wird das STT-Verfahren beschrieben, das das bevorstehende Kurzschlussaufreißen durch eine Messung des Spannungsgradienten dU/dt erkennt. Bei Überschreiten eines Grenzwertes wird der Strom einige Mikrosekunden vor dem Aufreißen auf 50 A reduziert.

Nachteile dieses Verfahrens sind zum einen die sehr aufwendige Signalaufbereitung der Spannungsmessung, die durch elektromagnetische Felder im Schweißprozess sehr stark gestört wird und damit die Signalempfindlichkeit beschränkt. Zum Anderen begrenzt die Induktivität der Schweißenergiequelle die Geschwindigkeit der Umkehr und Reduzierung des Stroms, so dass ausgehend von einem hohen Niveau beim Aufreißen noch ein sehr hoher Energieeintrag erfolgt.

Aufgabe der Erfindung ist es, ein Metall-Schutzgas-Lichtbogenschweißverfahren anzugeben, das es ermöglicht beim Lichtbogenschweißen einen möglichst geringen Energieeintrag in der Kurzschlussphase zu erreichen.

Erfindungsgemäß wird diese Aufgabe mit den kennzeichnenden Merkmalen des Anspruches 1 gelöst. Vorteilhafte Weiterbildungen sind in den Unteransprüchen angegeben.

So wird mittels einer Definition von Schwellwerten in der Kurzschlussphase die Charakteristik der Schweißenergiequelle erreicht, so dass beim Aufreißen der Kurzschlussbrücke und Wiederzünden des Lichtbogens zum Einen der Energieeintrag einen möglichst geringen wert hat und zum Anderen der Energieeintrag schnellstmöglich abfällt. Daneben wird das bevorstehende Aufreißen der Brücke vor seinem Eintreten erkennbar.

Das erfindungsgemäße Verfahren ist in Anspruch 1 definiert.

Der erste Schwellwert S1 ist z.B. eine Spannung und der zweite Schwellwert S2 ist z.B. eine Spannung, ein Strom, ein Widerstand, eine Leistung oder ein beliebiger anderer geeigneter Schwellwert.

In einer Weiterbildung der Erfindung wiederholen sich die beiden Phasen A und B solange, bis der Kurzschluss aufgetrennt ist, wobei die Abtastfrequenz der Schwellwerte und damit die Dauer der Phase A und der Phase B veränderbar sind.
Das Aufreißen der Kurzschlussbrücke sowie das anschließende Zünden des Lichtbogens erfolgt immer in der Phase B.
Der Energieanstieg in der Phase A und der Energieabfall in der Phase B sind hierbei beliebig.

In einer weiteren Ausbildung der Erfindung wird der Energieanstieg in der Phase A und der Energieabfall in der Phase B durch eine polynomische, exponentielle, trigonometrische, zyklometrische oder hyperbolische Funktion beschrieben.

Hierbei wird in einer Weiterbildung der Energieanstieg in der Phase A und der Energieabfall in der Phase B durch eine Kombination oder Aneinanderreihung von Funktionen beschrieben.
Der zeitliche Verlauf des Energieeintrags vor und nach dem Kurzschluss ist beliebig.

In einer weiteren Ausführung der Erfindung wird der zeitliche Verlauf des Energieeintrags vor und nach dem Kurzschluss durch eine polynomische, exponentielle, trigonometrische, zyklometrische oder hyperbolische Funktion dargestellt, wobei in einer Weiterbildung der zeitliche Verlauf des Energieeintrags vor und nach dem Kurzschluss durch eine Kombination und/oder Aneinanderreihung von Funktionen beschrieben werden kann.

Erfindungsgemäß wird der Übergang von einer zu einer anderen Funktion durch ein Zeitkriterium und/oder eine Bewertung von einem oder mehreren Schweißprozesssignalen ausgelöst wobei die Prozesssignale mittels eines neuronalen Netzes bewertet werden können.

Der Übergang von einer zu einer anderen Funktion wird erfindungsgemäß durch einer logische Verknüpfung von Kriterien ausgelöst.

Ein solches Schweißprozesssignal ist die Schweißspannung, der Schweißstrom oder jede beliebige durch einen Sensor messbare Prozessgröße, wobei die Prozessgröße eine Strahlung, Schall, ein elektrisches Feld oder ein magnetisches Feld ist.

In einer weiteren Ausführung der Erfindung wird die Schweißenergiequelle vorzugsweise stromgeregelt aber auch spannungs-, leistungs- oder widerstandsgeregelt wird.

Die Schweißenergiequelle arbeitet in verschiedenen Prozessphasen mit unterschiedlichen Regelungen.

Der Energieeintrag passt sich über den zeitlichen Verlauf an den Werkstoffübergang selbstregelnd an und verringert sich beim Auftrennen des Kurzschlusses auf ein Minimum. Der Schweißprozess wird gleichmäßiger und ruhiger. Eine Spritzerbildung tritt nicht mehr auf.
Das Wiederzünden des Lichtbogens erfolgt nicht mehr explosionsartig, und insbesondere beim Dünnblechschweißen wird die Schmelze nicht mehr herausgeschleudert.
Die Verdampfung von Elektrodenmaterial wird wesentlich verringert.
Weiterhin lassen sich sehr dünne Bleche fehlerfrei fügen. Bei oberflächenveredelten Blechen verringert sich die Gefahr der unzureichenden Entgasung, und der Abbrand der Veredelungsschicht ist sehr gering.

Ausführungsbeispiele der Erfindung sind in den Zeichnungen dargestellt und werden im Folgenden näher beschrieben.

Es zeigen
- Fig. 1: einen schematischen Strom- und Spannungsverlauf eines Klb-Schweißprozesses,
- Fig. 2: einen schematischen Strom- und Spannungsverlauf eines Kurzschlusses beim Impulsstromschweißen und
- Fig. 3: einen erfindungsgemäßen Strom- und Spannungsverlauf im Kurzschluss.

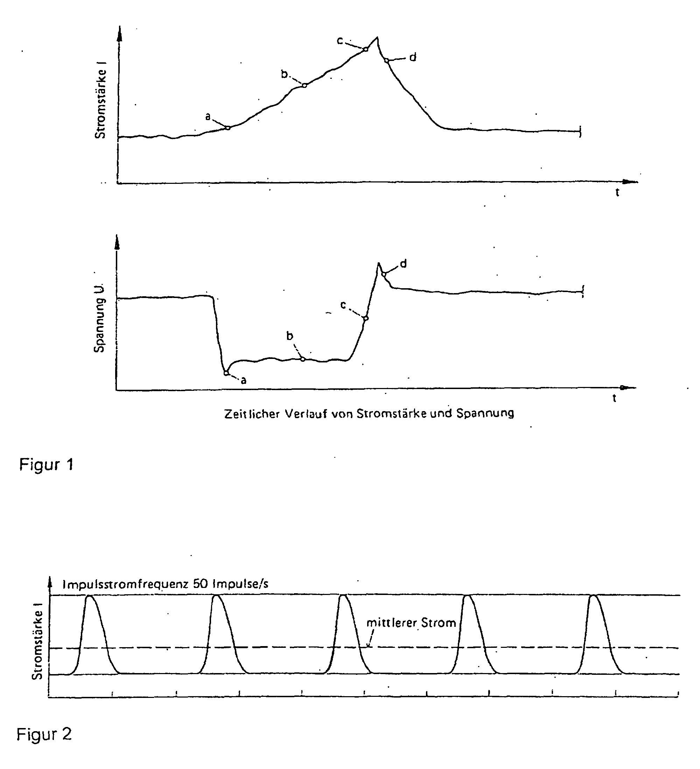

Beim Kurzlichtbogen-Schweißen gemäß Fig. 1 kommt es in bekannter Weise zu einem dauernden Wechsel zwischen einer Lichtbogenbrennphase und einer Kurzschlussphase. In der Kurzschlussphase erlischt der Lichtbogen, und es entsteht eine schmelzflüssige Verbindung zwischen der abschmelzenden Elektrode und dem werkstückseitigen Schmelzbad. Wie im Stromverlauf in Figur 1 erkennbar ist, steigt der Strom vom Zeitpunkt a mit der Zeit stetig an, so dass beim Aufreißen der Kurzschlussbrücke und Zünden des Lichtbogens zwischen c und d ein hoher Energieeintrag erfolgt.

Dieses tritt ebenfalls gelegentlich beim ansonsten kurzschlussfreien Impulslichtbogenschweißen gemäß Fig. 2 auf.

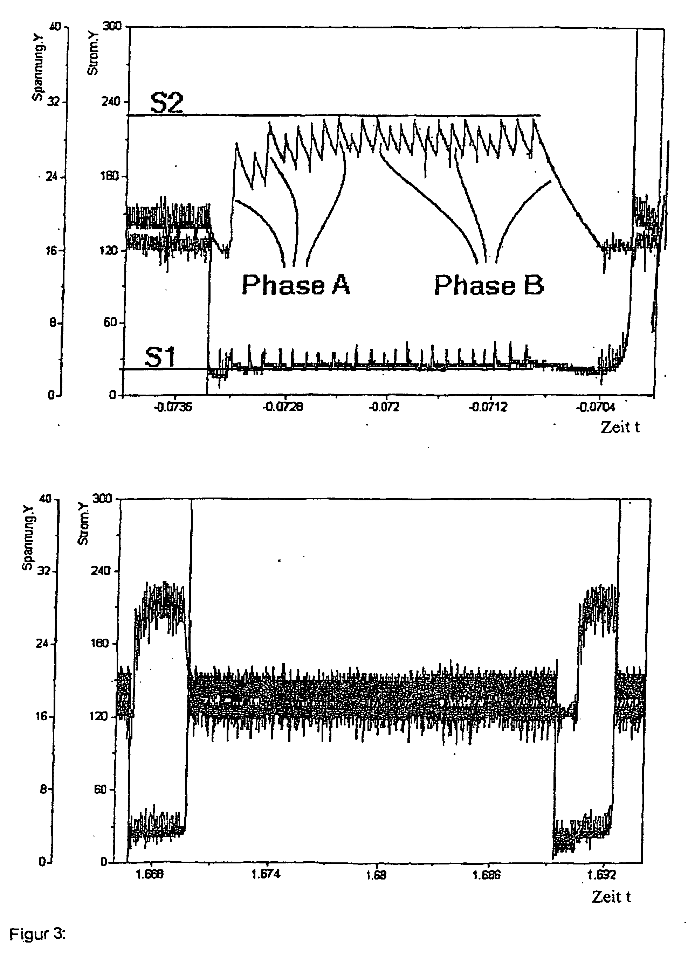

In Fig. 3. ist ein Ausführungsbeispiel des prinzipiellen Verlaufs von Strom und Spannung dargestellt. Der Schwellwert S1 ist eine Spannungswert, und der Schwellwert S2 ein Stromwert.

## Patentansprüche

1. Verfahren zum Metall-Schutzgas-Lichtbogenschweißen beim Wiederzünden im Schweißprozess,
**dadurch gekennzeichnet, dass**
bei Beginn eines Kurzschlusses eine Regelung aktiviert, wird und für die Kurzschlussdauer aktiv ist, die in einer ersten Phase A bei Unterschreiten eines ersten charakteristischen Schwellwertes S1 den Energieeintrag erhöht, und in einer zweiten Phase B den Energieeintrag bei Erreichen eines zweiten verschiedenen charakteristischen Schwellwertes S2 beendet und im Anschluss den Energieeintrag vermindert.

2. Verfahren nach Anspruch 1,
**dadurch, gekennzeichnet, dass**
der erste Schwellwert S1 eine Spannung und der zweite andere Schwellwert S2 eine Spannung, ein Strom, ein Widerstand, eine Leistung oder ein beliebiger anderer geeigneter Schwellwert ist.

3. Verfahren nach Anspruch 1 oder 2,
**dadurch gekennzeichnet, dass**
beide Phasen A und B solange wiederholt werden, bis der Kurzschluss aufgetrennt ist.

4. Verfahren nach Anspruch 3,
**dadurch gekennzeichnet, dass**
die Abtastfrequenz des Schwellwertes und damit die Dauer der Phase A und der Phase B veränderbar sind.

5. Verfahren nach einem der Ansprüche 1 bis 4,
**dadurch gekennzeichnet, dass**
das Aufreißen der Kurzschlussbrücke sowie das anschließende Zünden des Lichtbogens immer in der Phase B erfolgt.

6. Verfahren nach Anspruch 5,
**dadurch gekennzeichnet, dass**
der Energieanstieg in der Phase A und der Energieabfall in der Phase B beliebig sind.

7. Verfahren nach einem der Ansprüche 1 bis 6,
**dadurch gekennzeichnet, dass**
der Energieanstieg in der Phase A und der Energieabfall in der Phase B durch eine polynomische, exponentielle, trigonometrische, zyklometrische oder hyperbolische Funktion beschrieben werden kann.

8. Verfahren nach Anspruch 7,
**dadurch gekennzeichnet, dass**
der Energieanstieg in der Phase A und der Energieabfall in der Phase B durch eine Kombination oder Aneinanderreihung von Funktionen beschrieben wird.

9. Verfahren nach einem der Ansprüche 1 bis 8,
**dadurch gekennzeichnet, dass**
der zeitliche Verlauf des Energieeintrags vor und nach dem Kurzschluss beliebig abläuft.

10. Verfahren nach Anspruch 9,
**dadurch gekennzeichnet, dass**
der zeitliche Verlauf des Energieeintrags vor und nach dem Kurzschluss durch eine polynomische, exponentielle, trigonometrische, zyklometrische oder hyperbolische Funktion beschrieben wird.

11. Verfahren nach einem der Ansprüche 1 bis 10,
**dadurch gekennzeichnet, dass**
der zeitliche Verlauf des Energieeintrags vor und nach dem Kurzschluss durch eine Kombination und / oder Aneinanderreihung von Funktionen beschrieben wird.

12. Verfahren nach Anspruch 11,
**dadurch gekennzeichnet, dass**
der Übergang von einer zu einer anderen Funktion durch ein Zeitkriterium und / oder eine Bewertung von einem oder mehreren Schweißprozesssignalen ausgelöst wird.

13. Verfahren nach einem der Ansprüche 1 bis 12,
**dadurch gekennzeichnet, dass**
die Prozesssignale mittels eines neuronalen Netzes bewertet werden.

14. Verfahren nach Anspruch 13,
**dadurch gekennzeichnet, dass**
der Übergang von einer zu einer anderen Funktion durch einer logische Verknüpfung von Kriterien ausgelöst wird.

15. Verfahren nach einem der Ansprüche 1 bis 14,
**dadurch gekennzeichnet, dass**
als solches Schweißprozesssignal die Schweißspannung, der Schweißstrom oder jede beliebige durch einen Sensor messbare Prozessgröße gewählt wird.

16. Verfahren nach Anspruch 15,
**dadurch gekennzeichnet, dass**
die Prozessgröße eine Strahlung, Schall, ein elektri sches Feld oder ein magnetisches Feld ist.

17. Verfahren nach einem der Ansprüche 1 bis 16,
**dadurch gekennzeichnet, dass**
die Schweißenergiequelle vorzugsweise stromgeregelt wird.

18. Verfahren nach Anspruch 17,
**dadurch gekennzeichnet, dass**
die Schweißenergiequelle spannungs-, leistungs- oder widerstandsgeregelt wird.

19. verfahren nach einem der Ansprüche 1 und 18,
**dadurch gekennzeichnet, dass**
die Schweißenergiequelle in verschiedenen Prozessphasen mit unterschiedlichen Regelungen geregelt wird.

## Claims

1. A method used in gas-shielded metal arc welding on re-striking in the welding process, **characterised in that** at the start of a short-circuit a regulation system is activated and is active for the duration of the short circuit, which regulation system in a first phase A increases the energy input if a first characteristic threshold value S1 is not reached, and in a second phase B terminates the energy input when a second different characteristic threshold value S2 is reached, and then reduces the energy input.

2. A method according to claim 1, **characterised in that** the first threshold value S1 is a voltage and the second other threshold value S2 is a voltage, a current, a resistance, a power or any other suitable threshold value.

3. A method according to claim 1 or 2, **characterised in that** the two phases A and B are repeated until the short-circuit is broken.

4. A method according to claim 3, **characterised in that** the scanning frequency of the threshold value and hence the duration of phase A and phase B are variable.

5. A method according to any one of claims 1 to 4, **characterised in that** the opening of the short-circuit bridge and the subsequent striking of the arc always takes place in phase B.

6. A method according to claim 5, **characterised in that** the energy rise in phase A and the energy drop in phase B are arbitrary.

7. A method according to any one of claims 1 to 6, **characterised in that** the energy rise in phase A and the energy drop in phase B can be described by a polynomial, exponential, trigonometric, cyclometric or hyperbolic function.

8. A method according to claim 7, **characterised in that** the energy rise in phase A and the energy drop in phase B are described by a combination or concatenation of functions.

9. A method according to any one of claims 1 to 8, **characterised in that** the course of the energy input per unit of time before and after the short circuit is arbitrary.

10. A method according to claim 9, **characterised in that** the course of the energy input per unit of time before and after the short circuit is described by a polynomial, exponential, trigonometric, cyclometric or hyperbolic function.

11. A method according to any one of claims 1 to 10, **characterised in that** the course of the energy input per unit of time before and after the short circuit is described by a combination and/or concatenation of functions.

12. A method according to claim 11, **characterised in that** the transition from one function to another is triggered by a time criterion and/or an evaluation of one or more welding process signals.

13. A method according to any one of claims 1 to 12, **characterised in that** the process signals are evaluated by means of a neuronal network.

14. A method according to claim 13, **characterised in that** the transition from one function to another is triggered by a logic association of criteria.

15. A method according to any one of claims 1 to 14, **characterised in that** the welding process signal selected is the welding voltage, the welding current or any arbitrary process variable measurable by a sensor.

16. A method according to claim 15, **characterised in that** the process variable is a radiation, sound, an electric field or a magnetic field.

17. A method according to any one of claims 1 to 16, **characterised in that** the welding energy source is preferably current-regulated.

18. A method according to claim 17, **characterised in that** the welding energy source is voltage-regulated, power-regulated or resistance-regulated.

19. A method according to claim 1 or 18, **characterised in that** the welding energy source is regulated with different regulation systems in different process phases.

## Revendications

1. Procédé pour le soudage à l'arc de métal sous gaz protecteur lors du réamorçage dans le procédé de soudage, **caractérisé en ce qu'**au début d'un court-circuit, un réglage est activé et est actif pour la durée du court-circuit, qui augmente l'apport d'énergie dans une première phase A en cas de sous-dépassement d'une première valeur seuil S1 caractéristique et arrête l'apport d'énergie dans une seconde phase B lorsqu'une seconde valeur seuil S2 caractéristique différente est atteinte et réduit ensuite l'apport d'énergie.

2. Procédé selon la revendication 1, **caractérisé en ce que** la première valeur seuil S1 est une tension et la seconde autre valeur seuil S2 est une tension, un courant, une résistance, une puissance ou une autre valeur seuil appropriée quelconque.

3. Procédé selon la revendication 1 ou 2, **caractérisé en ce que** les deux phases A et B sont répétées jusqu'à ce que le court-circuit soit séparé.

4. Procédé selon la revendication 3, **caractérisé en ce que** la fréquence de balayage de la valeur seuil et donc la durée de la phase A et de la phase B sont modifiables.

5. Procédé selon l'une quelconque des revendications 1 à 4, **caractérisé en ce que** l'arrachement du pont de court-circuit et l'allumage consécutif de l'arc s'effectuent toujours dans la phase B.

6. Procédé selon la revendication 5, **caractérisé en ce que** l'augmentation de l'énergie dans la phase A et la réduction d'énergie dans la phase B sont quelconques.

7. Procédé selon l'une quelconque des revendications 1 à 6 **caractérisé en ce que** l'augmentation d'énergie dans la phase A et la réduction d'énergie dans la phase B peuvent être décrites par une fonction polynomique, exponentielle, trigonométrique, cyclométrique ou hyperbolique.

8. Procédé selon la revendication 7, **caractérisé en ce que** l'augmentation d'énergie dans la phase A et la réduction d'énergie dans la phase B sont décrites par une combinaison ou un alignement de fonctions.

9. Procédé selon l'une quelconque des revendications 1 à 8, **caractérisé en ce que** la variation dans le temps de l'apport d'énergie avant et après le court-circuit se déroule de façon quelconque.

10. Procédé selon la revendication 9, **caractérisé en ce que** la variation dans le temps de l'apport d'énergie avant et après le court-circuit est décrite par une fonction polynomique, exponentielle, trigonométrique, cyclométrique ou hyperbolique.

11. Procédé selon l'une quelconque des revendications 1 à 10, **caractérisé en ce que** la variation dans le temps de l'apport d'énergie avant et après le court-circuit est décrite par une combinaison et/ou un alignement de fonctions.

12. Procédé selon la revendication 11, **caractérisé en ce que** le passage d'une fonction à une autre fonction est déclenché par un critère de temps et/ou une analyse d'un ou de plusieurs signaux de procédé de soudage.

13. Procédé selon l'une quelconque des revendications 1 à 12, **caractérisé en ce que** les signaux de procédé sont évalués au moyen d'un réseau neuronal.

14. Procédé selon la revendication 13, **caractérisé en ce que** le passage d'une fonction à une autre fonction est déclenché par un enchaînement logique de critères.

15. Procédé selon l'une quelconque des revendications 1 à 14, **caractérisé en ce qu'**en tant que tel signal de procédé de soudage, la tension de soudage, le courant de soudage ou toute grandeur du procédé quelconque pouvant être mesurée par un capteur est choisie.

16. Procédé selon la revendication 15, **caractérisé en ce que** la grandeur du procédé est un rayonnement, un son, un champ électrique ou un champ magnétique.

17. procédé selon l'une quelconque des revendications 1 à 16, **caractérisé en ce que** la source d'énergie de soudage est de préférence régulée au niveau du courant.

18. Procédé selon la revendication 17, **caractérisé en ce que** la source d'énergie de soudage est régulée au niveau de la tension, de la puissance ou de la résistance.

19. Procédé selon l'une quelconque des revendications 1 à 18, **caractérisé en ce que** la source d'énergie de soudage est régulée dans différentes phases de procédé avec différents réglages.
